# EUROPEAN PATENT APPLICATION

(11) **EP 2 327 619 A2**
(43) Date of publication of application: **01.06.2011**
(21) Application number: 10157457.2
(22) Date of filing: 24.03.2010
(51) Int. Cl.: B63B 25/28, B63B 39/02, F03D 1/00

(54) **A wind turbine installation vessel and an adjustment device for its center of gravity**

(30) Priority: 27.11.2009 CN 200910237984
(71) Applicant: Sany Electric Co., Ltd., Huilongguan Changping District Beijing 102206 (CN)
(72) Inventor: Wu, Jialiang, 102206, Beijing (CN); Wang, Xinming, 102206, Beijing (CN); Li, Yanlin, 102206, Beijing (CN); Bai, Junlei, 102206, Beijing (CN)
(74) Representative: Kling, Simone

(57) **Abstract**

The present invention discloses a gravity center adjustment device for a wind turbine installation vessel, with the gravity center adjustment device (2) fixedly mounted to the outside of the vessel body (4) of the wind turbine installation vessel. The existence of the gravity center adjustment device (2) according to the present invention is independent from the vessel body and no longer limited by the size of the installation vessel and the size of the ballast bank provided in the vessel body of the wind turbine installation vessel. The size of the gravity center adjustment device (2) may be set as desired so that the adjustment ability of the gravity center adjustment device can be changed, whereby its ability for adjusting gravity center of the wind turbine installation vessel can be improved and the stability of the wind turbine installation vessel can be improved. Therefore, the wind turbine installation vessel can operate in an environment of poor weather condition, so that the operation efficiency can be improved and the cost of constructing a wind power plant on the offshore can be reduced. The present invention also discloses a wind turbine installation vessel including the above-mentioned gravity center adjustment device (2).

## Description

### FIELD OF THE INVENTION

The present invention relates to an engineering machinery field, in particular, to a gravity center adjustment device for a wind turbine installation vessel. The present invention also relates to a wind turbine installation vessel including the gravity center adjustment device.

### THE RELATED ART

With rapid development of economic construction, electric energy has had more and more influence on economic construction and people's life. As one of various electric power generation ways, wind power generation has drawn people's more and more attention.

The so-called wind power generation is an electric power generation way in which kinetic energy of wind is converted into mechanical energy which is then converted into electric energy. Because offshore wind resource is very rich, more and more wind power plants are being built on the offshore. During the wind power plants are constructed on the offshore, the installation of wind turbine (i.e., wind power generation unit) is an important procedure, which is typically implemented by means of a wind turbine installation vessel. The installation of wind turbine means that the wind turbine is installed onto a wind turbine installation base which is pre-set on the offshore.

In the prior art, there are mainly two kinds of wind turbine installation ways, i.e., integral type installation and split type installation.

The integral type installation is an installation way in which the wind turbine is assembled at the dock or the like and then transported to the wind power plant so that the whole wind turbine is installed in position at a time, which is generally carried out by means of an integral installation vessel (floating crane vessel). The integral installation vessel includes a vessel body and a hoisting device provided on the vessel body. The hoisting device includes a hanging hook that is connected by steel wire ropes, whereby the hoisting of the wind turbine is achieved by the hanging hook.

During the operation, after the integral installation vessel arrives at a pre-determined location, the integral installation vessel is roughly positioned through dropping an anchor. Then, the assembled wind turbine, which is transported from the dock by a transporting vessel, is hoisted and installed onto the wind turbine installation base.

The split type installation is an installation way in which the tower, nacelle and rotor of the wind turbine are installed on the wind turbine installation base in turn, which is generally carried out by means of a split installation vessel. The split installation vessel is substantially same as the integral installation vessel in structure, except that legs for fixing to the vessel body are added.

During the operation, after the split installation vessel arrives at a pre-determined location, the split installation vessel is roughly positioned through dropping an anchor and is then supported by the legs and hoisted by a hoisting device.

During the installation of wind turbine by the integral installation vessel, the gravity center of the vessel displaces as a result of the displacement of the wind turbine. Meanwhile, in order to keep the installation vessel stable, it is generally that water is injected into an ballast bank formed in the installation vessel, thereby realizing the purpose of varying the gravity center of the wind turbine installation vessel.

However, on one hand, the ability of adjusting the gravity center of the wind turbine installation vessel is limited due to the limited size of the wind turbine installation vessel and the limited space of the ballast bank formed in the vessel body; on the other hand, in the case of adjusting the gravity center of the wind turbine installation vessel by injecting water into the ballast bank of the wind turbine installation vessel, the gravity center of the wind turbine installation vessel will always be on the vessel body or above the vessel body, and it is impossible that the gravity center of the wind turbine installation vessel would be below the vessel body, which limits the ability of adjusting the gravity center of the wind turbine installation vessel, and particularly, which is far from meeting the actual requirement in the case that the weather condition is poor and the gravity center of the wind turbine installation vessel is required to be lowered in order to improve the stability of the wind turbine installation vessel.

Therefore, how to improve the ability of adjusting the gravity center of the wind turbine installation vessel and improve the stability of the wind turbine installation vessel is becoming a technical problem that needs to be addressed by those skilled in the art.

### SUMMARY OF THE INVENTION

An object of the present invention is to provide a gravity center adjustment device, which has an improved ability of adjusting a gravity center of a wind turbine installation vessel so as to improve stability of the wind turbine installation vessel. Another object of the present invention is to provide a wind turbine installation vessel including the gravity center adjustment device.

To address the above technical problem, the invention provides a gravity center adjustment device for a wind turbine installation vessel, which is fixedly mounted to an outside of a vessel body of the wind turbine installation vessel.

Preferably, the gravity center adjustment device includes a mounting rack, a counterweight and a height adjuster for adjusting a relative height between the counterweight and the vessel body, with the mounting rack mounted to the vessel body by a connecting member, and the counterweight mounted to the mounting rack by the height adjuster.

Preferably, the mounting rack includes a horizontal installation plate and the counterweight is mounted to the horizontal installation plate by the height adjuster.

Preferably, the height adjuster is a screw stem, and at least one of the horizontal installation plate and the counterweight is provided with a screw hole that corresponds to the screw stem.

Preferably, the screw hole includes a first screw hole which is formed in the counterweight. A first end of the screw stem passes through the first screw hole or connects with the first screw hole, and is spaced from an upper surface of the counterweight at a certain distance, while a second end of the screw stem is fixedly connected to the horizontal installation plate.

Preferably, the height adjuster is an oil cylinder, a piston barrel of the oil cylinder is fixed to the horizontal installation plate, and an end of a piston rod of the oil cylinder is fixedly connected with the counterweight.

Preferably, the gravity center adjustment device is mounted below the vessel body.

Preferably, a plurality of the gravity center adjustment devices are evenly arranged on left and right sides of the vessel body.

The invention also provides a wind turbine installation vessel, which includes any one of the gravity center adjustment devices described above.

Preferably, a bottom surface of the vessel body is of a planar structure.

The gravity center adjustment device according to the present invention is used for the wind turbine installation vessel and fixedly mounted to the outside of the vessel body of the wind turbine installation vessel. When the wind turbine installation vessel is subjected to the influence of weather conditions and operation states and it is required to adjust the gravity center of the wind turbine installation vessel, the adjustment can be made by the gravity center adjustment device fixedly mounted to the outside of the vessel body of the wind turbine installation vessel. It can be seen that the existence of the gravity center adjustment device according to the present invention may be independent from the vessel body and no longer limited by the size of the wind turbine installation vessel and the size of the ballast bank provided in the vessel body of the wind turbine installation vessel. The size of the gravity center adjustment device may be set as desired so that the adjustment ability of the gravity center adjustment device can be changed, whereby its ability of adjusting the gravity center of the wind turbine installation vessel can be improved and the stability of the wind turbine installation vessel can be improved. Therefore, the wind turbine installation vessel can operate in an environment of poor weather condition, so that the operation efficiency can be improved and the cost of constructing a wind power plant on the offshore can be reduced.

In a preferred embodiment, the gravity center adjustment device according to the present invention includes the mounting rack, the counterweight and the height adjuster for adjusting the relative height between the counterweight and the vessel body, with the mounting rack mounted to the vessel body by the connecting member, and the counterweight mounted to the mounting rack by the height adjuster. When the adjustment of the gravity center of the wind turbine installation vessel is performed, the relative height between the counterweight and the vessel body is adjusted by the height adjuster to change the height of the counterweight, thereby achieving the adjustment of the gravity center of the wind turbine installation vessel in such a way that the position of the gravity center can meet installation requirements of the wind turbine, so that the stability of the wind turbine installation vessel can be improved and the installation efficiency can be improved. The arrangement of the mounting rack, the counterweight and the height adjuster not only simplifies the process of adjusting the gravity center of the wind turbine installation vessel, but also has a higher adjustment speed compared with the situation of injecting water into the ballast bank of vessel body. On the other hand, the counterweight for matching the wind turbine installation vessel may be selected according to the working environment and the size of the wind turbine installation vessel, so as to meet the requirements on the adjustment of the gravity center of the wind turbine installation vessel under different working conditions, thereby further enhancing the ability of adjusting the gravity center of the wind turbine installation vessel and improving the adaptability of the wind turbine installation vessel.

In another preferred embodiment, the bottom surface of the vessel body of the wind turbine installation vessel according to the present invention is of the planar structure. The bottom surface of the vessel body with the planar structure can stay aground in a region with relatively lower water depth and in the situation of relatively lower water level. Thus, the wind turbine installation vessel can operate in an intertidal zone in such a way that it stays aground during ebb tide and it sails during flood tide, so that the applying range of the wind turbine installation vessel can be enlarged and the adaptability of the wind turbine installation vessel can be improved.

### BRIEF DESCRIPTION OF THE DRAWINGS

Figure 1 is a schematic perspective view of an embodiment of a wind turbine installation vessel according to the present invention;

Figure 2 is a schematic side view of the embodiment of the wind turbine installation vessel according to the present invention;

Figure 3 is a schematic plan view of the embodiment of the wind turbine installation vessel according to the present invention;

Figure 4 is a schematic perspective view of an embodiment of the gravity center adjustment device according to the present invention.

### DETAILED DESCRIPTION OF THE INVENTION

The kernel of the present invention is to provide a gravity center adjustment device, which has an improved ability of adjusting the gravity center of a wind turbine installation vessel so as to improve stability of the wind turbine installation vessel. Another kernel of the present invention is to provide a wind turbine installation vessel including the gravity center adjustment device.

In order that those skilled in the art can understand the technical solution of the present invention better, the present invention will be explained in further detail hereinafter with reference to the accompanying drawings and embodiments.

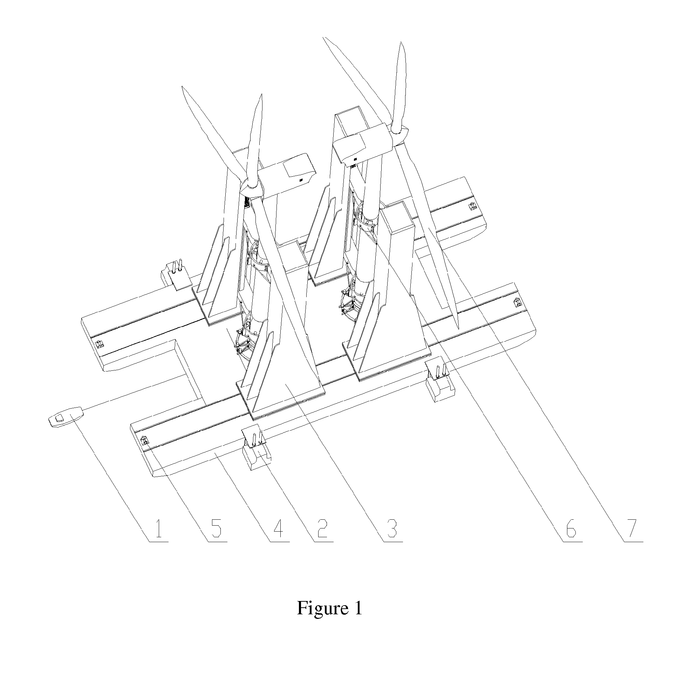

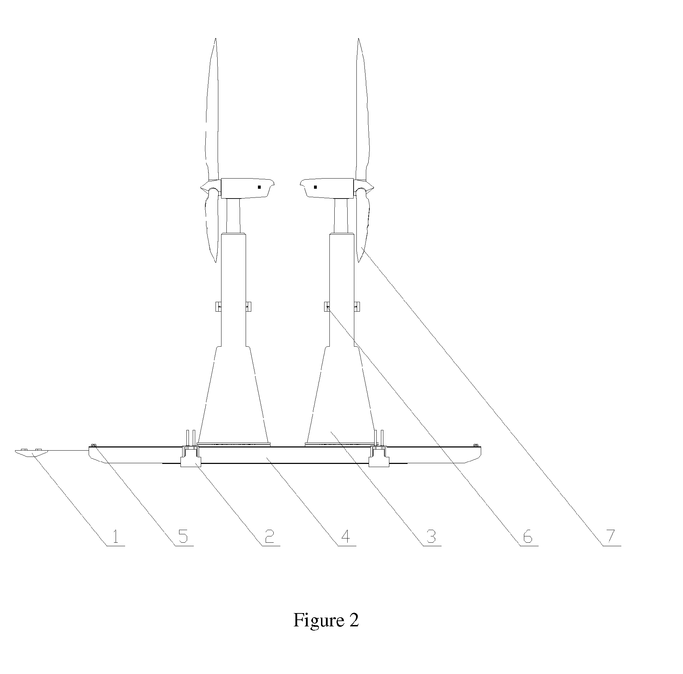

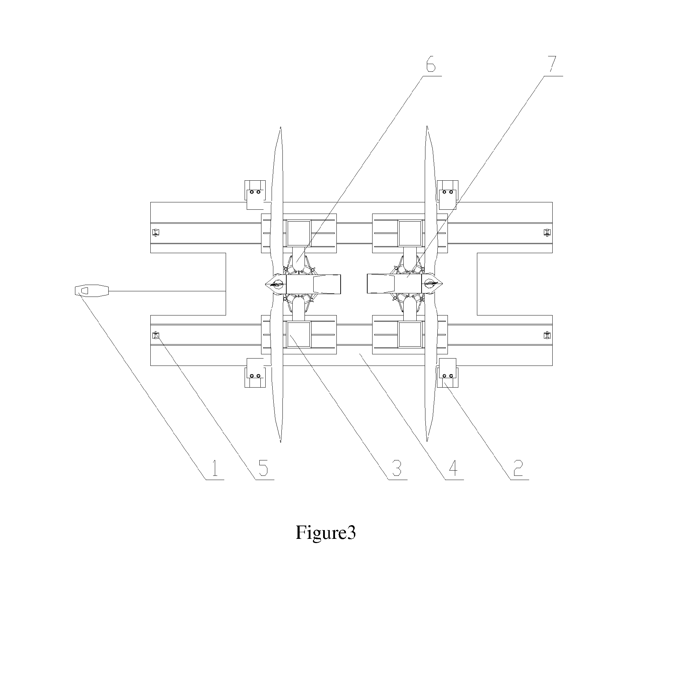

Reference is firstly made to Figures 1-3, wherein Figure 1 is a schematic perspective view of an embodiment of a wind turbine installation vessel according to the present invention, Fig.2 is a schematic side view of the embodiment of the wind turbine installation vessel according to the present invention, and Fig.3 is a schematic plan view of the embodiment of the wind turbine installation vessel according to the present invention.

As shown in the Figures, in one embodiment, a gravity center adjustment device 2 according to the present invention is mounted to an outside of a vessel body 4 of the wind turbine installation vessel. The outside as discussed herein means that the gravity center adjustment device 2 is located at the periphery of the vessel body 4, including around and below the vessel body, rather than being located inside or above the vessel body 4.

The Figures show a particular wind turbine installation vessel equipped with the gravity center adjustment device 2 according to the present invention. The turbine installation vessel includes a vessel body 4, an upright column 3 mounted on the vessel body 4, an enclasping mechanism 6 mounted to the upright column 3, an anchoring mechanism 5 mounted at the four corners of the vessel body 4 for fixing the vessel body 4, and the gravity center adjustment device 2 that is fixedly mounted to the vessel body 4, with the gravity center adjustment device 2 located at the outside of the vessel body 4. The vessel body 4 is provided thereon with movement rails for the upright column 3, which are perpendicular to each other, so that the upright column 3 can move along the rails under the effect of its motorization member, thereby realizing the transverse and longitudinal movement of the wind turbine 7 on the vessel body 4. U-shaped openings are formed in front and rear ends of the vessel body 4 so that the wind turbine 7 can be mounted onto a wind turbine base through these openings. Of course, the wind turbine installation vessel may also have the other structure. What is described herein is only one exemplified embodiment and cannot be used as any limitation on the structures other than the gravity center adjustment device 2.

During operation, the wind turbine is assembled at the dock, and then the assembled wind turbine is installed on the vessel body 4 of the wind turbine installation vessel by means of a hoisting device, such as a crane, and enclasped by the enclasping mechanism 6. Since such wind turbine installation vessel does not have any traction device, a traction vessel 1 is required in order to move the wind turbine installation vessel to an offshore wind power plant. After arriving at the offshore wind power plant, the traction vessel 1 draws the wind turbine installation vessel to a position of the base of the wind turbine 7 corresponding to the U-shaped openings. Then, the anchoring mechanism 5 drops an anchor to roughly fix the wind turbine installation vessel. Meanwhile, the upright column 3, the enclasping mechanism 6 mounted on the upright column 3 and the wind turbine 7 enclasped by the enclasping mechanism 6 are moved to the U-shaped openings under the effect of the motorization device, and then hoisted above the base by the hoisting mechanism provided inside the upright column 3. Next, the wind turbine 7 and the base are fixedly connected under the cooperative effect of the motorization device and the hoisting mechanism. Thereafter, the enclasping mechanism 6 and the upright column 3 are moved away and finally, the installation platform for the wind turbine 7 is moved away. During the installation of the wind turbine, in order to ensure that the installation process goes smoothly, the gravity center adjustment device 2 according to the present invention is located at the outside of the vessel body 4 so that the gravity center position of the wind turbine installation vessel can be adjusted as desired, thereby achieving a convenient adjustment of the gravity center and providing a better working environment for the installation of the wind turbine 7.

It can be seen that, since the gravity center adjustment device according to the present invention is located outside of the vessel body, the existence of the gravity center adjustment device is independent from the vessel body and no longer limited by the size of the wind turbine installation vessel and the size of the ballast bank provided in the vessel body 4 of the wind turbine installation vessel. The size of the gravity center adjustment device 2 may be set as desired so that the adjustment ability of the gravity center adjustment device 2 can be changed, whereby its ability of adjusting the gravity center of the wind turbine installation vessel can be improved and the stability of the wind turbine installation vessel can be improved. Therefore, the wind turbine installation vessel can operate in an environment of poor weather condition, so that the operation efficiency can be improved and the cost of constructing a wind power plant on the offshore can be reduced.

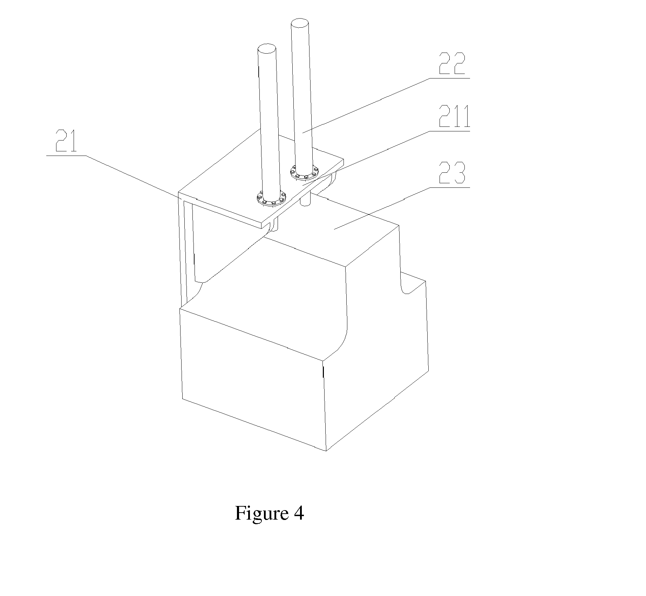

Reference is now made to Figure 4, which is a schematic perspective view of an embodiment of the gravity center adjustment device according to the present invention.

In the embodiment, the gravity center adjustment device 2 according to the present invention may include a mounting rack 21, a counterweight 23 and a height adjuster 22 for adjusting a relative height between the counterweight 23 and the vessel body 4, with the mounting rack 21 mounted to the vessel body 4 by a connecting member, and the counterweight 23 mounted to the mounting rack 21 by the height adjuster 22. Specifically, the connecting member may be a bolt. Accordingly, a screw hole is provided at a corresponding position of the vessel body 4.

The counterweight 23 may have a stepped structure so as to be easily mounted to the mounting rack 21 by the height adjuster 22. The counterweight 23 may be machined into other shapes as desired. In general, the material of the counterweight 23 may be steel, or other materials with a larger density than water. Of course, the specific shape and the used material are not limited to what have been described herein. Any shape and material that can meet the functional requirements may be selected.

When the adjustment of gravity center of the wind turbine installation vessel is performed, the relative height between the counterweight 23 and the vessel body 4 is adjusted by the height adjuster 22 to change the height of the counterweight 23, thereby achieving the adjustment of gravity center of the wind turbine installation vessel in such a way that the position of the gravity center can meet installation requirements of the wind turbine, so that the stability of the installation vessel can be improved and the installation efficiency can be improved.

In this way, the arrangement of the mounting rack 21, the counterweight 23 and the height adjuster 22 not only simplifies the process of adjusting the gravity center of the wind turbine installation vessel, but also has a higher adjustment speed compared with the situation of injecting water into the ballast bank of vessel body. On the other hand, the counterweight 23 for matching the wind turbine installation vessel may be selected according to the working environment and the size of the wind turbine installation vessel, so as to meet the requirements on the adjustment of the gravity center of the wind turbine installation vessel under different working conditions, thereby further enhancing the ability for adjusting the gravity center of the wind turbine installation vessel and improving the adaptability of the wind turbine installation vessel.

Specifically, the mounting rack 21 of the gravity center adjustment device 2 according to the present invention may include a horizontal installation plate 211. The counterweight 23 may be mounted to the horizontal installation plate 211 by the height adjuster 22.

The fact that the counterweight 23 is mounted to the horizontal installation plate 211 by the height adjuster 22 not only facilitates installation of the counterweight 23, but also makes the height adjuster 22 adjust the vertical position of the counterweight 23 more conveniently, so that the variation of the position of the counterweight 23 in the vertical direction is more apparent, thus further improving the efficiency of adjusting gravity center in the vertical direction.

In one embodiment, the height adjuster 22 of the gravity center adjustment device 2 according to the present invention may be a screw stem, and at least one of the horizontal installation plate 211 and the counterweight 23 is formed with a screw hole that corresponds to the screw stem. In this way, the height position of the counterweight 23 can be changed by rotating the screw stem in the screw hole, whereby realizing the adjustment of the height position of the gravity center of the wind turbine installation vessel. The screw stem is simple in structure and low in cost, which reduces the cost of the gravity center adjustment device 2.

Specifically, the counterweight 23 may be formed with a first screw hole. A first end of the screw stem passes through the first screw hole or connects with the first screw hole, and is spaced from an upper surface of counterweight 23 at a certain distance, while a second end of the screw stem is fixedly connected to the horizontal installation plate 211. In this way, during the adjustment of the height position of the counterweight 23, the counterweight 23 can move upwardly along the screw stem in the vertical direction through rotating the counterweight 23. This is a quite simple adjustment process. Meanwhile, whether the first end of the screw stem passes through the first screw hole or connects with the first screw hole is specifically determined according to the length of the screw stem and the thickness of the counterweight 23 in the vertical direction. If the screw is relatively long and the thickness of the counterweight 23 in the vertical direction is relatively thin, the first end passed through the first screw hole of the counterweight 23; otherwise, the first end connects with the first screw hole of the counterweight 23.

Of course, the first end of the screw stem may be fixed to the counterweight 23 while the second end passes through or connects with the screw hole formed in the horizontal installation plate 211, or both ends of the screw stem are threadedly connected with the counterweight 23 and the horizontal installation plate 211, respectively, as long as the functional requirements can be met.

In another embodiment, the height adjuster 22 according to the present invention may be an oil cylinder. A piston barrel of the oil cylinder is fixed to the horizontal installation plate, and an end of a piston rod of the oil cylinder is fixedly connected with the counterweight 23. With the protrusion and retraction of the piston rod of the oil cylinder, the height of the counterweight 23 can be changed so that the gravity center position of the wind turbine installation vessel can be adjusted. The oil cylinder is mature in structure, easy to operate and highly reliable, making it easy to realize the adjustment of gravity center position of the wind turbine installation vessel.

For facilitating installation of the gravity center adjustment device 2, the gravity center adjustment device 2 may be installed below the vessel body 4, depending on the structure of the wind turbine installation vessel. Of course, the gravity center adjustment device 2 may be installed on left and right sides of the vessel body 4. Meanwhile, a plurality of gravity center adjustment devices 2 may be arranged evenly around the vessel body 4. In this way, the gravity center adjustment devices 2 may also be made having different heights so as to adjust, in a certain extent, the gravity center position of the wind turbine installation vessel in the horizontal direction.

In addition to the above discussed gravity center adjustment device, the present invention also provides a wind turbine installation vessel including the above-mentioned gravity center adjustment device. With respect to the structure of other parts of the wind turbine installation vessel, it may refer to the prior art. The description of these parts is omitted herein.

In one embodiment, the bottom surface of the vessel body 4 of the wind turbine installation vessel according to the present invention is of the planar structure. The bottom surface of the vessel body 4 with the planar structure can stay aground in a region with relatively lower water depth and in the situation of relatively lower water level. Thus, the wind turbine installation vessel can operate in an intertidal zone in such a way that it stays aground during ebb tide and it sails during flood tide, so that the applying range of the wind turbine installation vessel can be enlarged and the adaptability of the wind turbine installation vessel can be improved.

The wind turbine installation vessel and gravity center adjustment device according to the present invention have been described in detail hereinbefore. Some exemplified examples are used to explain the principle and embodiments of the present invention herein, and the explanation of these examples only serves to help understand the method and kernel ideas of the present invention. It is noted that the present invention can be varied and modified by those with ordinary skills in the art, under the premise of being not departed from the principle of the invention. Those variation and modifications also fall within the scope of protection defined by the appended claims.

## Claims

1. A gravity center adjustment device for a wind turbine installation vessel, **characterized in that**, the gravity center adjustment device (2) is fixedly mounted to an outside of a vessel body (4) of the wind turbine installation vessel.

2. The gravity center adjustment device according to claim 1, wherein the gravity center adjustment device (2) comprises a mounting rack (21), a counterweight (23) and a height adjuster (22) for adjusting a relative height between the counterweight (23) and the vessel body (4), with the mounting rack (21) mounted to the vessel body (4) by a connecting member, and the counterweight (23) mounted to the mounting rack (21) by the height adjuster (22).

3. The gravity center adjustment device according to claim 2, wherein the mounting rack (21) comprises a horizontal installation plate (211), and the counterweight (23) is mounted to the horizontal installation plate (211) by the height adjuster (22).

4. The gravity center adjustment device according to claim 3, wherein the height adjuster (22) is a screw stem, and at least one of the horizontal installation plate (211) and the counterweight (23) is provided with a screw hole that corresponds to the screw stem.

5. The gravity center adjustment device according to claim 4, wherein
the screw hole comprises a first screw hole which is formed in the counterweight (23), and
a first end of the screw stem passes through the first screw hole or connects with the first screw hole, and is spaced from an upper surface of counterweight (23) at an appropriate distance, while a second end of the screw stem is fixedly connected to the horizontal installation plate (211).

6. The gravity center adjustment device according to claim 3, wherein the height adjuster (22) is an oil cylinder, a piston barrel of the oil cylinder is fixed to the horizontal installation plate (211), and an end of a piston rod of the oil cylinder is fixedly connected with the counterweight (23).

7. The gravity center adjustment device according to claim 5 or 6, wherein the gravity center adjustment device (2) is mount below the vessel body (4).

8. The gravity center adjustment device according to any one of claims 1 to 6, wherein a plurality of the gravity center adjustment devices (2) are evenly arranged on left and right sides of the vessel body (4).

9. A wind turbine installation vessel, **characterized by** comprising a gravity center adjustment device (2) according to any one of claims 1 to 8.

10. The wind turbine installation vessel according to claim 9, wherein a bottom surface of the vessel body (4) is of a planar structure.
